# EUROPÄISCHE PATENTANMELDUNG

(11) **EP 1 674 007 A1**
(43) Veröffentlichungstag der Anmeldung: **28.06.2006**
(21) Anmeldenummer: 05024426.8
(22) Anmeldetag: 09.11.2005
(51) Int. Cl.: A47J 31/40

(54) **Getränkemaschine zur Herstellung eines Heissgetränks durch Aufbrühen und Extrahieren einer in einer Kapsel abgepackten Substanz**

(30) Priorität: 22.11.2004 DE 102004056317
(71) Anmelder: Schifferle, René, 5312 Döttingen (CH)
(72) Erfinder: Schifferle, René, 5312 Döttingen (CH)
(74) Vertreter: Hering, Hartmut

(57) **Zusammenfassung**

Die Getränkemaschine zur Herstellung eines Heissgetränks durch Aufbrühen und Extrahieren einer in einer Kapsel (4) abgepackten Substanz (8) ist mit einer durch einen Brühkammerunterteil (2) und ein Verschlussorgan (3) gebildeten Brühkammer (1) versehen. Der Brühkammerunterteil (2) dient der formschlüssigen Aufnahme der Kapsel (4). Sowohl am Brühkammerunterteil (2) wie auch am Verschlussorgan (3) ist je ein Aufstechorgan (15, 20) zum beidseitigen Aufstechen der Kapsel (4) angeordnet ist. Beim Verschliessen der Brühkammer (1) wird der Brühkammerunterteil (2) zusammen mit der darin aufgenommenen Kapsel (4) in Relation zum Verschlussorgan (3) soweit bewegt, dass der Kapseldeckel (4a) durch das eine Aufstechorgan (20) aufgestochen wird, während der Kapselboden (4b) durch die Aufstechspitze (28) des anderen Aufstechorgans (15) soweit aufgestochen wird, dass dessen Aufstechspitze (28) den Kapselboden (4b) durchdringt, ohne dass gleichzeitig ein darin angeordneter Ablaufkanal (16) mit dem Innenraum der Kapsel (4) in Verbindung gebracht wird.

## Beschreibung

Die Erfindung betrifft eine Getränkemaschine zur Herstellung eines Heissgetränks durch Aufbrühen und Extrahieren einer in einer Kapsel abgepackten Substanz nach dem Oberbegriff des Anspruchs 1 bzw. 2.

Portionenkapseln der hier zur Rede stehenden Art dienen der hermetisch dichten Aufnahme einer für die Herstellung eines Heissgetränks vorgesehenen Substanz. Ein grundsätzlicher Vorteil solcher Portionenkapseln besteht darin, dass die darin aufgenommene Substanz, beispielsweise Kaffeepulver, über lange Zeit frisch gehalten werden kann. Zum Extrahieren von in einer Kapsel aufgenommenem Kaffeepulver werden einerseits halbautomatische Espressokaffeemaschinen verwendet, bei denen die Kapsel mit dem Verschlussdeckel nach unten in einen Kapselhalter eingesetzt wird. Aus der EP-A-0 512 470 ist eine gattungsgemässe Kaffeemaschine bekannt, bei welcher die Kapsel mit dem Deckel nach unten in den Kapselhalter eingesetzt wird. Der Kapselhalter wird mittels eines Bajonettverschlusses manuell an der Kaffeemaschine befestigt. Die Kaffeemaschine ist im Bereich der Portionenhalterbefestigung mit einem Aufstechorgan versehen, das radiale Austrittsöffnungen für die Durchleitung von Brühwasser aufweist. Beim Befestigen des Kapselhalters an der Kaffeemaschine durchstösst dieses Aufstechorgan den Boden der Portionenkapsel. Der Kapselhalter seinerseits ist am Boden mit einer Vielzahl von auf einem Ablaufrost angeordneten Erhebungen versehen. Diese Erhebungen durchdringen den Deckel der Kapsel und brechen ihn auf, sobald das in die Kapsel eingeleitete Brühwasser einen bestimmten Druck in der Kapsel aufgebaut hat. Beim nachfolgenden Aufbrühvorgang wird das Brühwasser über den Brühdorn in die Kapsel eingeleitet, wo es den darin aufgenommene Kaffee unter Überdruck durchströmen und über die Öffnungen im Deckel austreten kann. Das frisch aufgebrühte Kaffeegetränk kann über den Ablaufrost abfliessen und auf der Unterseite des Siebhalters über Auslässe austreten.

Aus der DE-C-41 92 762 ist ein Apparat zur Zubereitung eines flüssigen Produkts durch Einführung einer Flüssigkeit und/oder eines Dampfes in eine Portionenkapsel bekannt. Der Apparat ist mit einem Entnahmeteil versehen, der eine Kammer zur Aufnahme der Portionenkapsel aufweist. Die Portionenkapsel weist einen konkav nach innen gewölbten Boden auf. Maschinenseitig ist ein mit Flüssigkeitskanälen versehener Aufstechdorn vorgesehen, während am Boden des Entnahmeteils eine Vielzahl von Erhebungen angeordnet sind, welche eine Perforation des Kapselbodens bewirken, wenn dieser unter dem Einfluss des Brühwassers einen bestimmten Grad der Verformung erreicht hat. Bei einem alternativen Ausführungsbeispiel ist am Boden des Entnahmeteils ein einzelner Aufstechdorn angeordnet, der einen integrierten Flüssigkeitsablaufkanal aufweist. Durch die konkave Wölbung des Bodens soll erreicht werden, dass der Boden erst dann durch den Aufstechdorn aufgestochen wird, wenn sich der Boden bis zu einem bestimmten Grad verformt hat und sich der Innenraum der Kapsel vergrössert hat. Dadurch soll sichergestellt werden, dass das in die Kapsel eingeleitete Brühwasser während einer bestimmten Zeit auf die in der Kapsel aufgenommene Substanz einwirken kann, bevor der Boden der Kapsel aufgebrochen wird und das aufbereitete Getränk abfliesst.

Aus der EP-A-1 295 554 ist eine Kaffeemaschine zum Aufbrühen von in einer Kapsel abgepacktem Pulverkaffee bekannt, die mit einem unter Druck stehenden Heisswassersprinkler und einem relativ dazu bewegbaren Dispensierbecher versehen ist. Der Dispensierbecher ist mit einem offenen Hohlraum -Brühkammer- zur Aufnahme der Kapsel sowie einem zweiten Raum versehen, der mit einer Perkulatortülle zum Abführen des aufgebrühten Kaffees in Verbindung steht. Zwischen dem Hohlraum zur Aufnahme der Kapsel und dem zweiten Raum ist eine Platte angeordnet, die auf der Oberseite mit einer Vielzahl von Nadeln versehen ist. Jede dieser Nadeln ist mit einer konischen äusseren Oberfläche sowie mehreren Schlitzen versehen, welche jeweils über einen Durchlass in der Platte mit dem zweiten Raum verbunden sind. Der Heisswassersprinkler ist mit einem becherförmigen Vorderteil versehen, der entgegen einer Anzahl von Federn axial beweglich ist. Am starren Hinterteil des Heisswassersprinklers ist eine Durchstossvorrichtung in Form einer mit einer Vielzahl von Nadeln versehenen Platte angeordnet. Der becherförmige Vorderteil ist mit einer Endwand versehen, die mit einer Anzahl von Löchern versehen ist, durch welche sich die Nadeln in der Arbeitsposition des becherförmigen Vorderteils erstrecken können, damit die Oberseite der Kapsel durchstossen werden kann. Um den Dispensierbecher in axialer Richtung relativ zum Heisswassersprinkler zu bewegen, ist eine nicht näher dargestellte Betätigungsvorrichtung vorgesehen. Wenn der Dispensierbecher zum Heisswassersprinkler bewegt wird, wird die Kapseloberseite von den am Heisswassersprinkler angeordneten Nadeln durchstossen, während der Kapselboden unversehrt bleibt, da die auf der Platte angeordneten Nadeln von einer Länge sind, die ungefähr gleich, aber nicht grösser ist, als der Abstand zwischen einer ringförmigen Schulter am Boden des Hohlraums und einer ringförmigen Rille, welche der Aufnahme der genannten Platte dient. Die Höhe der auf der Platte zwischen dem Hohlraum und dem zweiten Raum angeordneten Nadeln ist somit so gewählt, dass die Nadeln den Boden der Kapsel nach dem Verschliessen der Brühkammer höchstens berühren nicht jedoch schwächen oder gar durchstossen. Nach dem Einleiten des Brühwassers in die Kapsel wird deren Boden dann unter der Einwirkung der Hitze sowie des Drucks des Wassers auswärts deformiert, so dass die Nadeln in den Kapselboden eindringen und diesen graduell durchstossen.

Aus der EP-A-1 101 430 ist eine Kapsel für ein Getränke Filter Kapsel System bekannt. Die Kapselseitenwand dieser Kapsel ist mit mehreren Stufen zum Abstützen eines Filterorgans bzw. einer porösen Membrane versehen, so dass zwischen dem Filterorgan bzw. der Membrane und dem Kapseldeckel bzw. dem Kapselboden ein Zwischenraum frei bleibt. Dieser Zwischenraum wird dazu genutzt, um ein Einlassrohr bzw. ein Ablaufrohr durch die Seitenwand in die Kapsel einzuführen.

Schliesslich ist aus der WO 00/42891 ein automatisches Brühsystem zum Aufbrühen von in einer Kapsel aufgenommenen Substanzen bekannt. Das Brühsystem ist mit einem Flüssigkeitsvorratstank und einer darin angeordneten Dosierkammer versehen, welche mit einer Druckluftpumpe zum Fördern einer bestimmten Menge an Flüssigkeit in Verbindung steht. Das System umfasst femer einen Kapselhalter der mit einem axial beweglichen Deckel zusammenwirkt. Sowohl am Deckel wie auch am Boden des Kapselhalters ist ein hohles Einstechelement angeordnet. Wird der Kapselhalter mittels des Deckels verschlossen, so wird durch die auf den Deckel einwirkende Kraft erreicht, dass sowohl der Kapseldeckel wie auch der Kapselboden vom jeweiligen' Aufstechelement durchstossen werden. Das am Boden des Kapselhalters angeordnete Einstechelement ist dabei so gestaltet, dass unmittelbar mit dem Durchstossen des Kapselbodens ein Ablauf für das aufbereitete Getränk geschaffen wird.

Die Erfindung zielt darauf ab, eine Getränkemaschine zur Herstellung eines Heissgetränks durch Aufbrühen und Extrahieren einer in einer Kapsel abgepackten Substanz derart weiterzubilden, dass die Kapsel auslassseitig zu einem vorbestimmbaren Zeitpunkt und an einer vorbestimmten Stelle aufgebrochen oder aufgestochen wird, wobei gleichzeitig die Verschmutzungsgefahr der Maschine durch den flüssig aus der Kapsel austretenden Extrakt vermindert werden soll und wobei der zum auslassseitigen Aufbrechen der Portionenkapsel ggf. notwendige Brühwasserdruck reduziert werden soll.

Hierzu wird nach der Erfindung eine Getränkemaschine nach Anspruch 1 oder alternativ nach Anspruch 2 bereitgestellt.

Indem beim Verschliessen der Brühkammer der Brühkammerunterteil zusammen mit der darin aufgenommenen Kapsel in axialer Richtung in Relation zum Verschlussorgan soweit bewegt wird, dass die Aufstechspitze des zweiten Aufstechorgans in den Kapselboden eindringt oder den Kapselboden soweit durchdringt, dass der Ablaufkanal noch nicht mit dem Innenraum der Kapsel in Verbindung steht, kann einerseits sichergestellt werden, dass der Kapselboden beim Einleiten von Brühwasser schon bei einem vergleichsweise geringen Überdruck und an einer vorbestimmten Stelle aufgebrochen bzw. aufgeweitet wird, wobei gleichzeitig die Verschmutzungsgefahr reduziert wird, da das Aufbrechen bzw. Aufweiten des Bodens kontinuierlich erfolgt.

Sofern der Kapselboden beim Verschliessen der Brühkammer durch das am Brühkammerunterteil angeordnete Aufstechorgan soweit aufgestochen wird, dass die Aufstechspitze den Boden durchdringt, ohne dass gleichzeitig der Ablaufkanal mit dem Innenraum der Kapsel in Verbindung gebracht wird, kann andererseits sichergestellt werden, dass das in der Kapsel zwangsläufig vorhandene, gasförmige Medium beim Einleiten von Brühwasser nach unten entweichen kann und die in der Kapsel aufgenommene Substanz gleichmässig benetzt wird, wobei in der Kapsel gleichzeitig ein bestimmter hydraulischer Überdruck aufgebaut werden kann, bevor der flüssige Extrakt aus der Kapsel austritt.

Bei der im Anspruch 2 beschriebenen alternativen Ausführungsform ist vorgesehen, dass das untere Aufstechorgan in axialer Richtung in Relation zum Brühkammerunterteil bewegbar ist. Dadurch kann der Boden der Kapsel unabhängig von der Schliessbewegung der Brühkammer und vom Zeitpunkt des Einleitens des Brühwassers aufgestochen werden.

Im Anspruch 19 wird zudem eine Kapsel zur Verwendung in einer nach einem der vorhergehenden Ansprüche ausgebildeten Getränkemaschine angegeben, während in den Ansprüchen 20 bis 24 bevorzugte Ausführungsformen der Kapsel umschrieben sind.

Auch sind in den Ansprüchen 25 und 26 noch entsprechende Verfahrensweisen angegeben.

Nachfolgend wird ein Ausführungsbeispiel der Erfindung anhand von Zeichnungen näher erläutert. In diesen Zeichnungen zeigt:

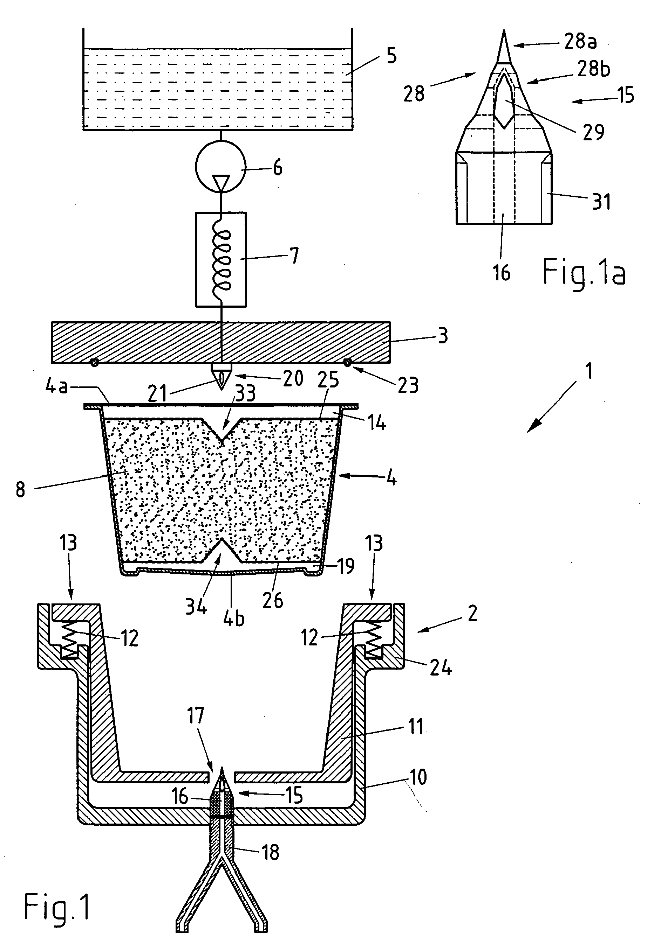

- Fig. 1: eine schematisch dargestellte Getränkemaschine zusammen mit einer Portionenkapsel in teilweisem Längsschnitt;
- Fig. 1 a: eine vergrösserte Darstellung des unteren Aufstechorgans;
- Fig. 2: einen Längsschnitt durch die Brühkammer und die Portionenkapsel in einer ersten Phase während des Verschliessens der Brühkammer;
- Fig. 3: einen Längsschnitt durch die verschlossene Brühkammer und die Portionenkapsel vor dem Einleiten von Brühwasser;
- Fig. 4: die verschlossene Brühkammer während des Einleitens von Brühwasser, und
- Fig. 5: ein alternatives Ausführungsbeispiel der Erfindung.

Die Fig. 1 zeigt eine schematisch dargestellte Getränkemaschine, welche im vorliegenden Fall als Kaffeemaschine ausgebildet ist. Namentlich sind eine Brühkammer 1, ein Frischwassertank 5, ein Pumpe 6 sowie ein Durchlauferhitzer 7 dargestellt. Die im Längsschnitt dargestellte Brühkammer 1 wird durch ein Brühkammerunterteil 2 sowie ein Verschlussorgan 3 gebildet. Schliesslich ist noch eine gemahlenen Kaffee 8 enthaltende Portionenkapsel 4 im Längsschnitt dargestellt. Die zum Fixieren des Brühkammerunterteils 2 an der Kaffeemaschine bzw. am Verschlussorgan 3 notwendigen Mittel sind dabei ebenso wenig dargestellt wie ein Mechanismus, mittels welchem die notwendige axiale Relativbewegung zwischen dem Brühkammerunterteil 2 und dem Verschlussorgan 3 zum Verschliessen der Brühkammer erzeugt wird.

Der Brühkammerunterteil 2 besteht aus einem äusseren Basisteil 10 und einer inneren Kapselaufnahme 11. Sowohl der Basisteil 10 wie auch die Kapselaufnahme 11 weisen eine im wesentlichen runde Form auf. Die Kapselaufnahme 11 ist zur formschlüssigen Aufnahme der Portionenkapsel 4 bestimmt und mittels Federn 12 am Basisteil 10 abgestützt. Auf der dem Verschlussorgan 3 zugewandten Oberseite ist die Kapselaufnahme 11 mit einer ringförmig umlaufenden Schulter 13 versehen. Der Basisteil 10 ist mit einem ringförmig umlaufenden Bund 24 versehen, welcher zusammen mit der Schulter 13 der Kapselaufnahme 11 einen axialen Anschlag beim Verschliessen der Brühkammer 1 bildet. Am Boden des Basisteils 10 ist ein Aufstechorgan 15 angeordnet, welches mit einem zentralen Ablaufkanal 16 versehen ist. Dieses Aufstechorgan 15 kann sich durch eine Öffnung 17 im Boden der Kapselaufnahme 11 in das Innere derselben erstrecken. Auf der Unterseite des Basisteils 10 ist ein Y-förmig ausgebildeter Getränkeauslass 18 angeordnet, der mit dem Ablaufkanal 16 des Aufstechorgans 15 in Verbindung steht. Die Kapselaufnahme 11 wirkt gleichzeitig als Fingerschutz, indem sie den Zugriff zu dem unteren Aufstechorgan 15 in dem hier dargestellten Ruhe-Zustand weitgehend verhindert.

Das Verschlussorgan 3 ist auf der dem Brühkammerunterteil 2 zugewandten Unterseite ebenfalls mit einem Aufstechorgan 20 versehen, über welches das zum Aufbrühen und Extrahieren des Kaffeepulvers 8 notwendige Brühwasser zugeführt wird. Dazu weist das Aufstechorgan 20 radiale Austrittsöffnungen 21 auf, über welche das Brühwasser aus dem Aufstechorgan 20 austreten kann. Am Verschlussorgan 3 ist eine ringförmige Dichtung 23 angeordnet, welche das Aufstechorgan 20 radial umschliesst und dem Abdichten des Kapseloberteils gegenüber dem Kapselunterteil dient.

Die Portionenkapsel 4 besteht aus einem becherförmigen Unterteil und dem daran angeschweissten Deckel 4a. Sowohl der becherförmige Unterteil wie auch der Deckel 4a sind aus einer sauerstoffundurchlässigen Mehrschichtfolie aus Kunststoff gefertigt, wobei insbesondere die den becherförmigen Unterteil der Kapsel 4 bildende Folie elastisch sein sollte. Obwohl sich eine derartige Portionenkapsel 4 zur Aufnahme von unterschiedlichsten, mittels Wasser extrahierbaren Substanzen eignet, wird nachfolgend jeweils von einer Portionenkapsel ausgegangen, die mit gemahlenem Kaffee -Kaffeepulver- gefüllt ist und sich zur Herstellung von Normal- bzw. Espressokaffee eignet. Der Boden 4b der Kapsel ist vorzugsweise leicht bombiert, d.h. er wölbt sich konvex nach aussen. Die Portionenkapsel 4 ist zudem vorzugsweise mit einem oberen siebartigen Organ 25 und einem unteren siebartigen Organ 26 versehen. Dabei wirkt das obere Organ als Verteilsieb 25 während das untere Organ als Sammelsieb 26 wirkt. Die beiden Siebe 25, 26 sind mit einer Vielzahl von axialen Durchlassöffnungen versehen, über welche das Brühwasser in das Innere der Kapsel 4 eintreten bzw. der flüssige Kaffeeextrakt aus dem mit Kaffeepulver gefüllten Kapselinnenraum 4 austreten kann. Beide Siebe 25, 26 sind mit einer zentralen, gegen das Kapselinnere gerichteten Vertiefung 33, 34 versehen, in welche sich das jeweilige Aufstechorgan 15, 20 nach dem Aufbrechen des Kapseldeckels 4a bzw. des Kapselbodens 4b erstrecken kann, ohne dass das entsprechende Sieb 25, 26 ebenfalls durchstochen wird. Zwischen den beiden Sieben 25, 26 ist das zu extrahierende Kaffeepulver 8 aufgenommen. Die beiden formstabil ausgebildeten Siebe 25, 26 sollen einerseits sicherstellen, dass der Kaffee 8 nach dem Aufstechen des Deckels 4a bzw. Bodens 4b nicht aus der Kapsel 4 austreten kann. Zum anderen soll das obere Verteilsieb 25 die gleichmässige Verteilung des Brühwassers über den Kapselquerschnitt sicherstellen, während das untere Sammelsieb 26 ermöglichen soll, dass der flüssige Kaffeeextrakt zu dem zentralen Aufstechorgan 15 fliessen kann. Dazu bleibt zwischen dem oberen Verteilsieb 25 und dem Kapseldeckel 4a bzw. zwischen dem unteren Sammelsieb 26 und dem Kapselboden 4b jeweils ein Zwischenraum 14, 19 frei. Anstelle der gezeigten Zwischenräume 14, 19 können die Siebe 25, 26 auch mit Vertiefungen in Form von Kanälen versehen sein, in welchen das Brühwasser bzw. der flüssige Kaffeeextrakt fliessen und sich ausbreiten bzw. sammeln kann. In diesem Fall können sich die Siebe 25, 26 mit den sich zwischen den Kanälen erstreckenden Erhebungen direkt am Boden 4b bzw. Deckel 4a der Kapsel 4 abstützen.

Die Fig. 1 a zeigt das Aufstechorgan 15 in einer vergrösserten Darstellung in einer Seitenansicht. Das Aufstechorgan 15 ist mit einer zweistufigen Spitze 28 versehen, wobei die erste Stufe 28a kegelförmig und spitz zulaufend ausgebildet ist und eine glatte Mantelfläche aufweist, während die zweite Stufe 28b flacher verläuft und mit mehreren radialen Öffnungen 29 versehen ist, welche in den zentralen Ablaufkanal 16 münden. Im unteren Bereich ist das Aufstechorgan 15 mit einem Gewinde 31 versehen, mittels welchem es im Basisteil des Brühkammerunterteils fixiert werden kann. Anstelle der radialen Öffnungen 29 kann die zweite Stufe 28b beispielsweise auch mit im wesentlichen axial verlaufenden Ablaufrinnen, Ablaufkanälen, Ablaufnuten oder dergleichen versehen sein. Zudem kann anstelle eines Gewindes 31 beispielsweise auch eine Steckverbindung zum Fixieren des Aufstechorgans 15 vorgesehen werden. Jedenfalls ist der Ablaufkanal bzw. die jeweilige radiale Öffnung 29 in axialer Richtung hinter bzw. unterhalb der Aufstechspitze 28 angeordnet.

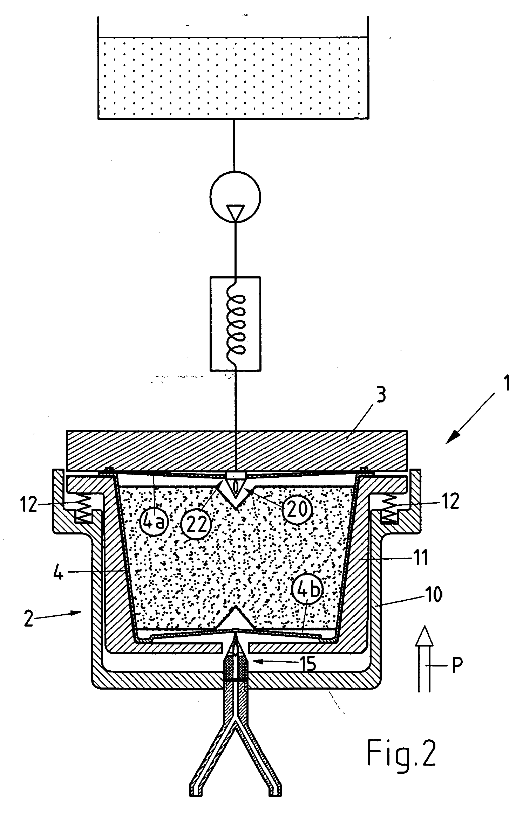

Die Fig. 2 zeigt einen Längsschnitt durch die Brühkammer 1 und die Portionenkapsel 4 in einer ersten Phase während des Verschliessens der Brühkammer 1. Nachdem die Portionenkapsel 4 in die Kapselaufnahme 11 eingesetzt ist, wird der Brühkammerunterteil 2 in Pfeilrichtung P nach oben gegen das Verschlussorgan 3 bewegt. Dabei wird die Kapselaufnahme 11 entgegen der Kraft der Federn 12 in den Basisteil 10 des Brühkammerunterteils 2 hineingedrückt. Gleichzeitig durchdringt das obere Aufstechorgan 20 den Kapseldeckel 4a, während sich das untere Aufstechorgan 15 am Kapselboden 4b anlegt und diesen nach oben drückt, so dass sich der Kapselboden 4b in Richtung des Kapseldeckels 4a verformt und das Kapselvolumen verkleinert wird. Indem der becherförmige Unterteil der Kapsel 4 aus einem elastischen Material gefertigt ist und der Kapselboden 4b bombiert ist, kann der Kapselboden 4b relativ leicht in Richtung des Kapseldeckels 4a ausgelenkt werden.

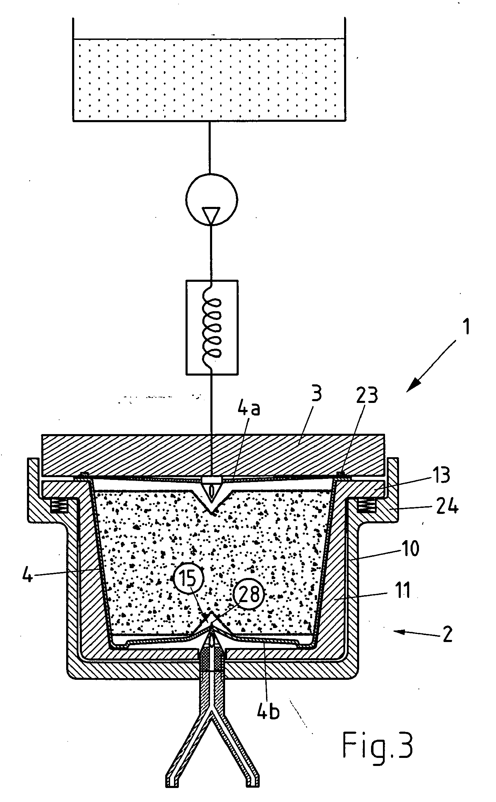

Fig. 3 zeigt einen Längsschnitt durch die verschlossene Brühkammer 1 und die Portionenkapsel 4 vor dem Einleiten von Brühwasser. Dieser geschlossene Zustand der Brühkammer 1 wird erreicht, indem der Brühkammerunterteil 2 mechanisch soweit nach oben verfahren wird, bis die Schulter 13 der Kapselaufnahme 11 an dem Bund 24 des Basisteils 10 aufsteht. Gleichzeitig wird der Kapseldeckel 4a gegenüber dem Kapselboden 4b auf der Kapselaussenseite hydraulisch abgedichtet, indem sich die auf der Unterseite des Verschlussorgans 3 angeordnete Dichtung 23 formschlüssig auf Oberseite des Kapseldeckels 4a anlegt und diesen in radialer Richtung nach aussen abdichtet. Im weiteren ist ersichtlich, dass die Spitze 28 des am Brühkammerunterteil 2 angeordneten Aufstechorgans 15, namentlich dessen erste Stufe 28a (Fig. 1a), den Kapselboden 4b durchdringt. Indem die erste Stufe 28a spitz zulaufend ausgebildet ist, während die zweite Stufe 28b flacher verläuft, wird erreicht, dass sich der Kapselboden 4b nach dem Verschliessen der Brühkammer 1 und vor dem Einleiten von Brühwasser an der zweiten Stufe 28b anlegt und in dieser Position verharrt. Indem der Kapselboden an der zweiten Stufe 28b ansteht kann sichergestellt werden, dass die radialen Öffnungen 29 bzw. der Ablaufkanal 16 noch nicht mit dem Innenraum der Kapsel 4 in Verbindung steht, dass jedoch der Boden 4b bereits perforiert ist. Anstelle des hier gezeigten Durchdringens -Perforieren- des Kapselbodens 4b durch die Spitze 28 des Aufstechorgans 15 kann es ggf. auch genügen, den Kapselboden 4b durch die Spitze 28 partiell zu schwächen, ohne dass jedoch die Spitze 28 den Kapselboden 4b durchdringt. Jedenfalls weist der Kapseldeckel 4a eine geringere Dehnbarkeit und/oder Reissfestigkeit auf als der Kapselboden 4b, so dass sichergestellt werden kann, dass beim Verschliessen der Brühkammer das obere Aufstechorgan 20 den Kapseldeckel 4a durchdringt und dieser dabei aufgebrochen wird, während der Boden 4b höchstens von der Spitze 28 des zugehörigen unteren Aufstechorgan 15 durchdrungen wird.

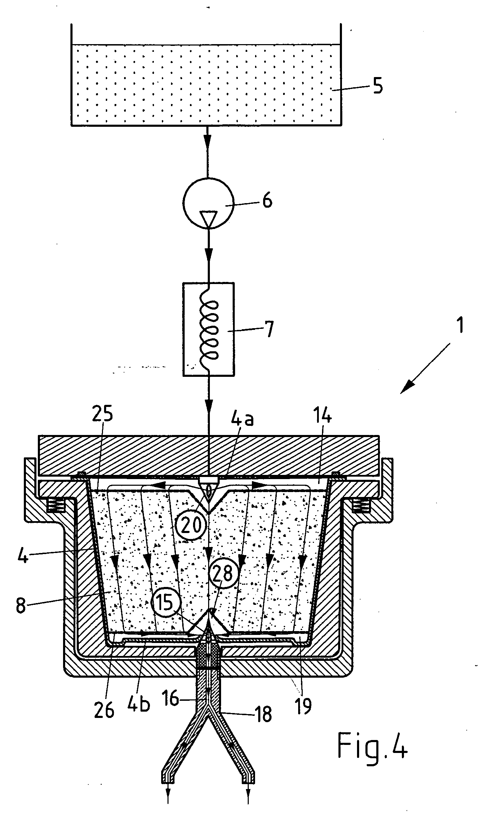

Fig. 4 zeigt die sogenannte Aufbrüh- oder Extraktionsphase. In dieser Phase wird mittels der Pumpe 6 Wasser aus dem Frischwassertank 5 in den Durchlauferhitzer 7 gefördert, wo es auf die gewünschte Brühtemperatur erhitzt wird. Das erhitzte und unter Überdruck stehende Wasser wird über das obere Aufstechorgan 20 in den Zwischenraum 14 zwischen dem Deckel 4a und dem oberen Verteilsieb 25 eingeleitet, wo es sich gleichmässig über den Kapselquerschnitt verteilt. Über die im oberen Verteilsieb 25 angeordneten Öffnungen dringt das Brühwasser in das Innere der Portionenkapsel 4 ein und extrahiert das Kaffeepulver. Über die in das untere Sammelsieb 26 eingelassenen Öffnungen strömt der flüssige Kaffeeextrakt in den Zwischenraum 19 zwischen dem unteren Sammelsieb 26 und dem Kapselboden 4b. Da die Kapsel 4 von der Kapselaufnahme 11 formschlüssig umfasst wird, bewirkt der durch das Einleiten von Brühwasser in der Kapsel 4 entstehende Überdruck, dass sich der Kapseldeckel 4a formschlüssig an der Unterseite des Verschlussorgans 3 anlegt und der Kapselboden 4b nach unten ausgelenkt wird, so dass dieser in etwa wieder seine ursprüngliche Form einnimmt und das Kapselvolumen zumindest annähernd wieder dem Ausgangswert entspricht. Beim Einleiten von Brühwasser kann das in der Kapsel aufgenommene Gas über den radialen Spalt zwischen Aufstechspitze 28 und Kapselboden 4b nach unten entweichen, was eine gleichmässigen Benetzung des in der Kapsel aufgenommenen Kaffeepulvers 8 begünstigt. Durch das Hinunterdrücken des Kapselbodens 4b wird die Aufstechöffnung im Kapselboden 4b soweit vergrössert, bis die radialen Öffnungen bzw. der Ablaufkanal 16 mit dem Innenraum der Kapsel 4 verbunden ist. Nun kann der flüssige Kaffeeextrakt von dem unteren Zwischenraum 19 über die radialen Öffnungen im Aufstechorgan 15 in den Ablaufkanal 16 und von da in den Getränkeauslass 18 strömen, über welchen es schliesslich austreten und in ein nicht näher dargestelltes Getränkegefäss einströmen kann.

Das mechanische Schwächen bzw. Aufstechen des Kapselbodens 4b in der beschriebenen Art bringt einige nennenswerte Vorteile mit sich:
- Der Kapselboden wird an einer vorbestimmten Stelle definiert geschwächt bzw. aufgestochen.
- Nach dem Einleiten von Brühwasser findet ein kontinuierliches Vergrössern der Aufstechöffnung statt, indem in der Kapsel hydraulisch ein Überdruck aufgebaut und der Kapselboden nach unten gegen das Aufstechorgan gedrückt wird. Dadurch kann der flüssige Kaffeeextrakt durch den sich kontinuierlich erweiternden Ablaufquerschnitt im unteren Aufstechorgan -kontinuierliches Freigeben der radialen Öffnungen- "sanft" nach unten Wegfliessen. Dadurch wird zum einen die Verschmutzungsgefahr reduziert, da der flüssige Kaffeeextrakt nicht wie bei einem ausschliesslich unter dem Druck des Brühwassers an einer Spitze aufbrechenden Kapselboden explosionsartig aus der Kapsel austritt. Andererseits kann das in der Kapsel aufgenommene gasförmige Medium, beispielsweise Luft und/oder CO₂ über den engen, radialen Spalt zwischen Aufstechspitze und Kapselboden nach unten entweichen, wenn von oben Brühwasser in die Kapsel eingeleitet wird. Dies hat zur Folge, dass ein homogenes Befeuchten des gemahlenen Kaffees über den gesamten Kapselquerschnitt begünstigt wird, wenn das Brühwasser von oben in die Kapsel einströmt.
- Der zum Aufbrechen des Kapselbodens bzw. zum Vergrössern der Aufstechöffnung notwendige Brühwasserdruck ist vergleichsweise gering.
- Der zum Aufbrechen des Kapselbodens bzw. zum Vergrössern der Aufstechöffnung notwendige Brühwasserdruck ist wesentlich exakter vorherbestimmbar.
- Die Portionenkapsel kann eine höhere Fertigungstoleranz in Bezug auf Masshaltigkeit aufweisen, ohne dass nachteilige Folgen zu erwarten sind.
- Der Boden muss nicht formstabil sein und/oder eine konkave Grundform aufweisen.
- Die Gefahr eines Aufbrechens der Kapsel an einer ungewollten Stelle durch den vergleichsweise hohen notwendigen hydraulischen Überdruck von bis zu 10 bar, wird praktisch eliminiert.

Anstelle eines Perforierens des Bodens durch das untere Aufstechorgan kann alternativ vorgesehen werden, dass der Boden 4b beim mechanischen Verschliessen der Brühkammer 1 durch das untere Aufstechorgan 15 lediglich geschwächt wird, ohne dass das untere Aufstechorgan 15 den Boden 4b durchdringt. Jedenfalls kann auch durch eine mechanisch erzeugte Schwächung sichergestellt werden, dass der Boden 4b nach dem Einleiten von Brühwasser kontinuierlich an einer definierten Stelle und bei vergleichsweise geringem Überdruck aufbricht. Unabhängig davon könnte das untere Aufstechorgan 15 mit einem Überdruckventil versehen werden, welches erst bei einem bestimmten Überdruck öffnet und den Ablaufkanal 16 freigibt.

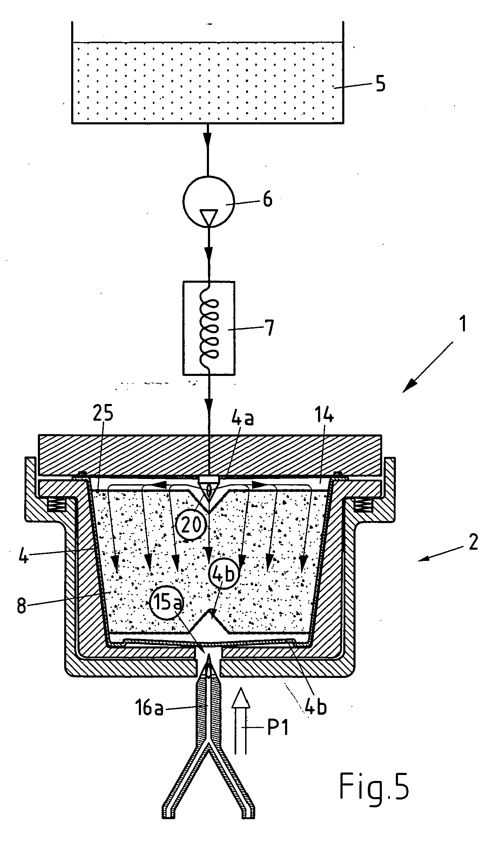

Die Fig. 5 zeigt ein alternatives Ausführungsbeispiel der Erfindung. In diesem Fall ist das untere Aufstechorgan 15a nicht fest am Brühkammerunterteil 2 befestigt, sondern in axialer Richtung relativ zu diesem bewegbar, was durch den Pfeil P1 angedeutet ist. Die dazu notwendigen Antriebsmittel sind nicht dargestellt. Diese Ausführungsvariante hat den Vorteil, dass der Zeitpunkt, an welchem der Kapselboden 4b aufgestochen wird, beliebig, d.h. unabhängig von der Schliessbewegung der Brühkammer und dem in der Kapsel vorherrschenden Druck gewählt werden kann. Vorzugsweise wird der Kapselboden 4b aufgestochen, kurz nachdem das Brühwasser von oben in die Kapsel 4 eingeleitet wurde. Das Aufstechen kann auch in diesem Fall zweistufig erfolgen, indem zuerst der Boden 4b perforiert wird, ohne dass der im Aufstechorgan 15a angeordnete Ablaufkanal 16a mit dem Innenraum der Kapsel 4 in Verbindung gebracht wird, so dass das in der Kapsel 4 aufgenommene Gas entweichen kann. Danach kann das Aufstechorgan 15a weiter in den Kapselboden 4b hineingedrückt werden, bis die radialen Öffnungen bzw. der Ablaufkanal 16a mit dem Innenraum der Kapsel 4 in Verbindung steht und der flüssige Kaffeeextrakt über den Ablaufkanal 16a abfliessen kann. Diese Variante hat den Vorteil, dass der Zeitpunkt, an welchem der Kapselboden 4b aufgestochen wird, unabhängig von der Schliessbewegung und dem Einleiten von Brühwasser gewählt werden kann. Im Übrigen treffen die meisten der vorgängig genannten Vorteile auch auf diese Ausführungsvariante zu.

Die erfindungsgemässe Lösung kann an allen Arten von Kaffeemaschinen realisiert werden. Diesbezüglich seien sowohl manuelle Kaffeemaschinen mit einem manuell zu befestigenden Kapselhalter, wie auch halbautomatische Kaffeemaschinen, bei denen die Kapsel manuell zugeführt und danach automatisch entfernt wird, wie auch Vollautomaten, bei welchen die Kapseln einer Brühkammer automatisch zugeführt und danach auch wieder automatisch entfernt werden, genannt. Wichtig ist lediglich, dass beim Verschliessen der Brühkammer eine bestimmte axiale Relativverschiebung zwischen der im Brühkammerunterteil aufgenommenen Kapsel und dem Verschlussorgan ausgeführt wird, damit zum einen der Kapseldeckel sicher aufgestochen und zum anderen der Kapselboden zumindest partiell geschwächt wird. Diese Relativbewegung muss in der Regel mehrere Millimeter betragen und kann beispielsweise über einen Bajonettverschluss, einen Exzenterantrieb, einen Hebel- oder Kniehebelmechanismus, einen Spindelantrieb, einen hydraulischen Antrieb oder einen Kulissenverschluss realisiert werden.

## Patentansprüche

1. Getränkemaschine zur Herstellung eines Heissgetränks durch Aufbrühen und Extrahieren einer in einer Kapsel (4) abgepackten Substanz (8), mit einer Pumpe (6) zum zwangsweisen Zuführen des Brühwassers und einer durch einen Brühkammerunterteil (2) und ein Verschlussorgan (3) gebildeten Brühkammer (1) zur Aufnahme der Kapsel (4), mit zumindest einem ersten Aufstechorgan (20) zum Aufstechen des Kapseldeckels (4a) und zumindest einem zweiten mit zumindest einer Aufstechspitze (28) und zumindest einem Ablaufkanal (16) versehenen Aufstechorgan (15) zum Aufstechen des Kapselbodens (4b), wobei beim Verschliessen der Brühkammer (1) der Brühkammerunterteil (2) zusammen mit der darin aufgenommenen Kapsel (4) in axialer Richtung in Relation zum Verschlussorgan (3) soweit bewegt wird, dass der Kapseldeckel (4a) durch das erste Aufstechorgan (20) aufgestochen wird, **dadurch gekennzeichnet, dass** beim Verschliessen der Brühkammer (1) der Brühkammerunterteil (2) zusammen mit der darin aufgenommenen Kapsel (4) in axialer Richtung in Relation zum Verschlussorgan (3) soweit bewegt wird, dass die Aufstechspitze (28) des zweiten Aufstechorgans (15) in den Kapselboden (4b) eindringt oder den Kapselboden (4b) höchstens soweit durchdringt, dass der Ablaufkanal (16) noch nicht mit dem Innenraum der Kapsel (4) in Verbindung steht.

2. Getränkemaschine zur Herstellung eines Heissgetränks durch Aufbrühen und Extrahieren einer in einer Kapsel (4) abgepackten Substanz (8), mit einer Pumpe (6) zum zwangsweisen Zuführen des Brühwassers und einer durch einen Brühkammerunterteil (2) und ein Verschlussorgan (3) gebildeten Brühkammer (1) zum Aufbrühen und Extrahieren der Substanz (8), wobei der Brühkammerunterteil (2) zur Aufnahme der Kapsel (4) ausgebildet ist und sowohl am Verschlussorgan (3) wie auch am Brühkammerunterteil (2) oder im Bereich des Brühkammerunterteils (2) zumindest je ein Aufstechorgan (15a, 20) zum beidseitigen Aufstechen der Kapsel (4) angeordnet ist, **dadurch gekennzeichnet, dass** das am Brühkammerunterteil (2) oder im Bereich des Brühkammerunterteils (2) angeordnete Aufstechorgan (15a) in axialer Richtung in Relation zum Brühkammerunterteil (2) bewegbar ist, und dass nach dem Verschliessen der Brühkammer (1) das genannte Aufstechorgan (15a) in axialer Richtung in Relation zum Brühkammerunterteil (2) derart bewegt wird, dass der Kapselboden (4b) damit aufgestochen wird.

3. Getränkemaschine nach Anspruch 1, **dadurch gekennzeichnet, dass** das erste Aufstechorgan (20) am Verschlussorgan (3) und das zweite Aufstechorgan (15) am Brühkammerunterteil (2) angeordnet ist, und dass der im zweiten Aufstechorgan (15) angeordnete Ablaufkanal (16) in axialer Richtung hinter bzw. unterhalb der Aufstechspitze (28) angeordnet ist.

4. Getränkemaschine nach Anspruch 3, **dadurch gekennzeichnet, dass** der Kapselboden (4b) durch die Einleitung von Brühwasser mittels des am Brühkammerunterteil (2) angeordneten Aufstechorgans (15) zumindest soweit aufgeweitet wird, dass dessen Ablaufkanal (16) mit dem Innenraum der Kapsel (4) in Verbindung gebracht wird.

5. Getränkemaschine nach Anspruch 3 oder 4, **dadurch gekennzeichnet, dass** das am Brühkammerunterteil (2) angeordnete Aufstechorgan (15) eine zweistufige Aufstechspitze (28) aufweist, wobei die erste Stufe eine Aufstechspitze (28a) aufweist und wobei die zweite Stufe (28b) mit zumindest einer in einen Ablaufkanal (16) mündenden Öffnung (29) versehen ist.

6. Getränkemaschine nach Anspruch 3 oder 4, **dadurch gekennzeichnet, dass** das am Brühkammerunterteil (2) angeordnete Aufstechorgan (15) eine zweistufige Aufstechspitze (28) aufweist, wobei die erste Stufe eine Aufstechspitze (28a) aufweist und wobei die zweite Stufe (28b) mit im wesentlichen axial verlaufenden Ablaufrinnen, Ablaufkanälen oder Ablaufnuten versehen ist.

7. Getränkemaschine nach Anspruch 5 oder 6, **dadurch gekennzeichnet, dass** die erste Stufe (28a) des Aufstechorgans (28) kegelförmig ausgebildet ist und eine glatte Mantelfläche aufweist.

8. Getränkemaschine nach einem der Ansprüche 3 bis 7, **dadurch gekennzeichnet, dass** der Brühkammerunterteil (2) mit einer die Kapsel (4) formschlüssig zu umfassenden Kapselaufnahme (11) versehen ist und der Kapselboden (4b) durch das zwangsweise Zuführen von Brühwasser derart verformt wird, dass der im zugeordneten Aufstechorgan (15) angeordnete Ablaufkanal (16) mit dem Innenraum der Kapsel (4) in Verbindung gebracht wird.

9. Getränkemaschine nach einem der Ansprüche 3 bis 8, **dadurch gekennzeichnet, dass** das eine Aufstechorgan (20) zentral am Verschlussorgan (3) und das andere Aufstechorgan (15) zentral am Brühkammerunterteil (2) angeordnet ist, und dass beide Aufstechorgane (15, 20) mit radialen Öffnungen (21, 29) zum Zuführen des Brühwassers bzw. zum Ableiten des flüssigen Extrakts versehen sind.

10. Getränkemaschine nach einem der Ansprüche 3 bis 9, **dadurch gekennzeichnet, dass** das Verschlussorgan (3) mit einer das Aufstechorgan (20) radial umschliessenden Dichtung (23) versehen ist, welche beim Verschliessen der Brühkammer den Kapseldeckel (4a) gegenüber dem Kapselboden (4b) auf der Kapselaussenseite hydraulisch abdichtet.

11. Getränkemaschine nach einem der Ansprüche 3 bis 10, **dadurch gekennzeichnet, dass** der Brühkammerunterteil (2) einen Basisteil (10) und eine mittels Federn (13) daran abgestützte Kapselaufnahme (11) umfasst, welch letztere mit einer dem Verschlussorgan (3) zugewandten Schulter (13) versehen ist, an welcher sich das Verschlussorgan (3) beim Verschliessen der Brühkammer (1) anlegt und welche zusammen mit einem am Basisteil (10) angeordneten Bund (24) einen axialen Anschlag beim Verschliessen der Brühkammer (1) bildet.

12. Getränkemaschine nach Anspruch 11, **dadurch gekennzeichnet, dass** das zweite Aufstechorgan (15) am Basisteil (10) angeordnet ist und die Kapselaufnahme (11) am Boden mit einer Öffnung (17) versehen ist, deren Lage mit dem zweiten Aufstechorgan (15) derart korrespondiert, dass sich das Aufstechorgan durch die Öffnung (17) in das Innere der Kapselaufnahme (11) hinein erstreckt, wenn die Kapselaufnahme (11) nach dem Verschliessen der Brühkammer (1) durch das Verschlusselement (3) entgegen der Kraft der Federn (13) in den Basisteil (11) hineingedrückt ist.

13. Getränkemaschine nach einem der Ansprüche 3 bis 12, **dadurch gekennzeichnet, dass** das am Brühkammerunterteil (2) angeordnete Aufstechorgan (15), oder die von dem Aufstechorgan wegführende Leitung mit einem Überdruckventil versehen ist.

14. Getränkemaschine nach Anspruch 2, **dadurch gekennzeichnet, dass** der Kapselboden (4b) nach dem Beginn des Einleitens von Brühwasser in das Innere der Kapsel (4) durch das am Brühkammerunterteil (2) oder im Bereich des Brühkammerunterteils (2) angeordnete Aufstechorgan (15a) soweit aufgestochen wird, dass der flüssige Extrakt über das Aufstechorgan (15a) oder einen im Aufstechorgan (15a) angeordneten Ablaufkanal (16a) aus der Kapsel (4) austreten kann.

15. Getränkemaschine nach Anspruch 14, **dadurch gekennzeichnet, dass** das Verschlussorgan (3) mit einer das Aufstechorgan (20) radial umschliessenden Dichtung (23) versehen ist, welche beim Verschliessen der Brühkammer den Kapseldeckel (4a) gegenüber dem Kapselboden (4b) auf der Kapselaussenseite hydraulisch abdichtet.

16. Getränkemaschine nach Anspruch 14 oder 15, **dadurch gekennzeichnet, dass** der Brühkammerunterteil (2) einen Basisteil (10) und eine mittels Federn (13) daran abgestützte Kapselaufnahme (11) umfasst, welch letztere die Kapsel (4) formschlüssig zu umfassen bestimmt ist und mit einer dem Verschlussorgan (3) zugewandten Schulter (13) versehen ist, an welcher sich das Verschlussorgan (3) beim Verschliessen der Brühkammer (1) anlegt und welche zusammen mit einem am Basisteil (10) angeordneten Bund (24) einen axialen Anschlag beim Verschliessen der Brühkammer (1) bildet.

17. Getränkemaschine nach Anspruch 16, **dadurch gekennzeichnet, dass** die Kapselaufnahme (11) am Boden mit einer Öffnung versehen ist, deren Lage mit dem zweiten Aufstechorgan (15a) derart korrespondiert, dass sich das Aufstechorgan (15a) durch die Öffnung in das Innere der Kapselaufnahme (11) hinein erstrecken kann, wenn die Kapselaufnahme (11) nach dem Verschliessen der Brühkammer (1) durch das Verschlusselement (3) entgegen der Kraft der Federn (13) in den Basisteil (11) hineingedrückt ist.

18. Getränkemaschine nach einem der Ansprüche 14 bis 17, **dadurch gekennzeichnet, dass** das am Brühkammerunterteil (2) oder im Bereich des Brühkammerunterteils (2) angeordnete Aufstechorgan (15a), oder die von dem Aufstechorgan wegführende Leitung mit einem Überdruckventil versehen ist.

19. Kapsel zur Verwendung in einer nach einem der vorhergehenden Ansprüche ausgebildeten Getränkemaschine, wobei die Kapsel (4) eine bestimmte Menge einer mittels heissem Wasser extrahierbaren Substanz (8) enthält, und wobei zumindest zwischen dem Kapselboden (4b) und der in der Kapsel (4) aufgenommenen Substanz (8) ein siebartiges Organ (26) angeordnet ist, **dadurch gekennzeichnet, dass** das siebartige Organ (26) mit einer zentralen, gegen das Kapselinnere gerichteten Vertiefung (34) versehen ist, welche derart dimensioniert ist, dass sich der Vorderteil des zum Aufstechen des Kapselbodens (4b) vorgesehenen Aufstechorgans (15) nach dem Durchdringen des Kapselbodens (4b) in diese Vertiefung (34) hinein erstrecken kann, ohne dass das siebartige Organ (26) vom Aufstechorgan (15) durchstochen wird.

20. Kapsel nach Anspruch 19, **dadurch gekennzeichnet, dass** sowohl zwischen dem Kapselboden (4b) und der in der Kapsel (4) aufgenommenen Substanz (8) wie auch zwischen dem Kapseldeckel (4a) und der in der Kapsel (4) aufgenommenen Substanz (8) je ein siebartiges Organ (25, 26) angeordnet ist, welche beiden Organe (15, 26) mit je einer zentralen, gegen das Kapselinnere gerichteten Vertiefung (33, 34) versehen sind, in welche sich das jeweilige Aufstechorgan (15, 20) nach dem Aufbrechen des Deckels (4a) bzw. des Kapselbodens (4b) erstrecken kann, ohne dass das entsprechende Organ (25, 26) durchstochen wird.

21. Kapsel nach Anspruch 19 oder 20, **dadurch gekennzeichnet, dass** jeweils zwischen dem siebartigen Organ (25, 26) und dem Kapseldeckel (4a) bzw. Kapselboden (4b) ein Zwischenraum (14, 19) freibleibt oder Flüssigkeitskanäle gebildet werden, in welchem bzw. welchen sich das Brühwasser verteilen bzw. der flüssige Extrakt sammeln kann.

22. Kapsel nach einem der Ansprüche 19 bis 21, **dadurch gekennzeichnet, dass** der Kapselboden (4b) bombiert ist.

23. Kapsel nach einem der Ansprüche 19 bis 22, **dadurch gekennzeichnet, dass** der Kapseldeckel (4a) eine geringere Dehnbarkeit und/oder Reissfestigkeit aufweist, als der Kapselboden (4b).

24. Kapsel nach einem der Ansprüche 19 bis 23, **dadurch gekennzeichnet, dass** der Kapselboden (4b) derart dimensioniert ist, dass beim Verschliessen der Brühkammer zumindest die Aufstechspitze des Aufstechorgans in den Kapselboden (4b) eindringt.

25. Verfahren zur Herstellung eines Heissgetränks durch Aufbrühen und Extrahieren einer in einer Portionenkapsel (4) aufgenommenen Substanz (8), insbesondere unter Verwendung einer nach dem Anspruch 1 ausgebildeten Getränkemaschine und einer nach dem Anspruch 19 ausgebildeten Kapsel, **dadurch gekennzeichnet, dass** die Kapsel (4) beim Verschliessen der Brühkammer (1) auf der einen Seite durch das eine Aufstechorgan (20) aufgestochen wird, während die Kapsel (4) auf der gegenüberliegenden Seite durch mechanische Einwirkung des zweiten Aufstechorgans (15) zumindest partiell geschwächt oder soweit aufgestochen wird, dass ein im zweiten Aufstechorgan (15) angeordneter Ablaufkanal (16) noch nicht mit dem Innenraum der Kapsel (4) in Verbindung gebracht wird, dass danach über das eine Aufstechorgan (20) Brühwasser von der einen Seite in die Kapsel (4) eingeleitet wird, welches in der Kapsel (4) hydraulisch einen Überdruck aufbaut, so dass die Kapsel (4) auf der zumindest partiell geschwächten oder aufgestochenen Seite vom zweiten Aufstechorgan (15) vollständig aufgestochen wird bzw. die Aufstechöffnung vom zweiten Aufstechorgan (15) soweit vergrössert wird, dass der im zweiten Aufstechorgan (15) angeordnete Ablaufkanal (16) mit dem Innenraum der Kapsel (4) in Verbindung gebracht wird und der flüssige Extrakt über den Ablaufkanal (16) abfliessen kann.

26. Verfahren zur Herstellung eines Heissgetränks durch Aufbrühen und Extrahieren einer in einer Portionenkapsel (4) aufgenommenen Substanz (8), insbesondere unter Verwendung einer nach dem Anspruch 2 ausgebildeten Getränkemaschine und einer nach dem Anspruch 19 ausgebildeten Kapsel, **dadurch gekennzeichnet, dass** die Kapsel (4) beim Verschliessen der Brühkammer (1) auf der einen Seite durch ein Aufstechorgan (20) aufgestochen wird und danach über dieses Aufstechorgan (20) Brühwasser in die Kapsel (4) eingeleitet und darin hydraulisch ein Überdruck aufgebaut wird, und dass danach die Kapsel (4) auf der andere Seite von dem zweiten Aufstechorgan (15a) aufgestochen wird, so dass der flüssige Extrakt über einen im zweiten Aufstechorgan (15a) angeordneten Ablaufkanal (16a) abfliessen kann.
